(19) Europäisches Patentamt
European Patent Office
Office européen des brevets

(11) Veröffentlichungsnummer : **0 115 818**
**B1**

(12) **EUROPÄISCHE PATENTSCHRIFT**

(45) Veröffentlichungstag der Patentschrift : **16.04.86**

(21) Anmeldenummer : **84100752.9**

(22) Anmeldetag : **21.01.84**

(51) Int. Cl.⁴ : **C 09 B 37/00**, C 09 B 43/11, C 09 B 41/00, C 09 B 67/34// C09B35/04, D21H1/46, C09B11/00

(54) **Kationische Polyazofarbstoffe, ihre stabilen Lösungen, ihre Herstellung und ihre Verwendung.**

(30) Priorität : **03.02.83 DE 3303512**

(43) Veröffentlichungstag der Anmeldung : **15.08.84 Patentblatt 84/33**

(45) Bekanntmachung des Hinweises auf die Patenterteilung : **16.04.86 Patentblatt 86/16**

(84) Benannte Vertragsstaaten : **CH DE FR GB IT LI**

(56) Entgegenhaltungen :
**EP-A- 0 036 553**
**EP-A- 0 045 840**
**US-A- 2 022 606**

(73) Patentinhaber : **BAYER AG**
**Konzernverwaltung RP Patentabteilung**
**D-5090 Leverkusen 1 Bayerwerk (DE)**

(72) Erfinder : **Raue, Roderich, Dr.**
**Berta-von-Suttner-Strasse 48**
**D-5090 Leverkusen 1 (DE)**

**EP 0 115 818 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind kationische Polyazofarbstoffe, die durch Umsetzung von Diaminobenzol-Derivaten der allgemeinen Formel

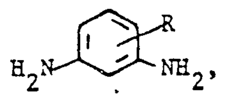

(I)

worin R für Wasserstoff, $C_1$- bis $C_4$-Alkyl, $C_1$-bis $C_4$-Alkoxy oder Halogen steht, gegebenenfalls in Mischung mit bis zu 30 % aromatischen Monoaminen der Formel

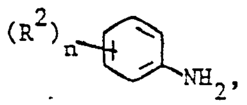

(II)

worin

$R^2$ für Wasserstoff, $C_1$- bis $C_4$-Alkyl, $C_1$- bis $C_4$-Alkoxy, Halogen oder $C_1$- bis $C_4$-Acylamino und

n für 1 bis 3 stehen,

mit 0,5 bis 0,75 mol eines Salzes oder Esters der salpetrigen Säure pro mol Diamin und anschließend mit 1 bis 4 mol eines Alkylenoxides der Formel

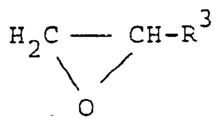

(III)

worin $R^3$ für Wasserstoff oder einen gegebenenfalls durch Hydroxy, Alkoxy oder Halogen substituierten $C_1$- bis $C_4$-Alkylrest steht,

erhältlich sind, ihre stabilen, gebrauchsfertigen Lösungen, ihre Herstellung und ihre Verwendung.

Farbstoffe, die aus den Diaminen I durch Nitrosierung und Kupplung erhalten werden, stellen komplexe Gemische dar, deren Hauptbestandteile üblicherweise als Tetraamino-bisazofarbstoffe der Formel IV (mit $R^1$ = Wasserstoff) beschrieben werden (vgl. Colour Index Nr. 21 000 und 21 010).

Den neuen Farbstoffen kommt demnach vor allem die Formel

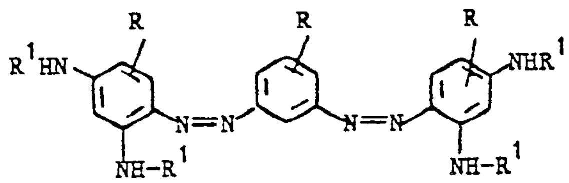

m · HX

zu, in welcher

R die oben angegebene Bedeutung hat,

$R^1$ für Wasserstoff oder den Rest

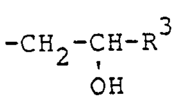

steht, in welchem

$R^3$ die oben angegebene Bedeutung hat, wobei

$R^1$ mindestens einmal verschieden von Wasserstoff ist

und worin

HX für eine aliphatische Carbonsäure mit 1 bis 4 C-Atomen, die gegebenenfalls durch Halogen, Hydroxy oder Alkoxy substituiert sein kann, oder ein Gemisch dieser Carbonsäuren mit anorganischen Säuren steht und

m 2 bis 10 bezeichnet.

Die Herstellung von kationischen Polyazofarbstoffen durch Umsetzung der salzsauren Lösung von m-Phenylendiamin mit Natriumnitrit ist seit langem bekannt. Hierbei wird die Entwicklung von Stickstoff unter Bildung schwach basischer Verbindungen und außerdem die Kupplung zu höhermolekularen unlöslichen Farbstoffen als Nebenreaktion beobachtet (E. Täuber und F. Walder, *B. 30*, 2111, 2899 ; *B. 33*, 2897). Die Bildung höhermolekularer Produkte läßt sich vermeiden, wenn man die Kupplung in Gegenwart großer Mengen von Kochsalz vornimmt (US-PS 2 022 606).

Die Direktherstellung gebrauchsfertiger Lösungen dieser kationischen Polyazofarbstoffe ist aus der EP-A 0 036 553 und der EP-A 0 045 840 bekannt. Sie erfolgt durch Umsetzung von aromatischen Diaminen, gegebenenfalls in Mischung mit bis zu 30 % aromatischen Monoaminen in aliphatischen Carbonsäuren mit einem Salz oder Ester der salpetrigen Säure. Lösungen dieser Art haben den Nachteil, daß sie bei längerem Lagern, schneller bei erhöhter Temperatur höherkondensierte Produkte bilden, die nicht mehr wasserlöslich sind. Die Lagerstabilität dieser Lösungen ist demnach unzureichend, und die Farbstärke der Lösungen nimmt nach einiger Zeit ab. Ein weiterer Nachteil der bekannten Verfahren besteht darin, daß sie auf die Verwendung von Carbonsäuren beschränkt sind, da in Gegenwart von anorganischen Mineralsäuren schwerlösliche Farbstoffsalze gebildet werden, die aus der Lösung ausfallen. Die Salze anorganischer Säuren besitzen aber eine höhere Lagerstabilität.

Es wurde nun gefunden, daß nach dem neuen Verfahren auch in Gegenwart anorganischer Säuren lagerstabile, gebrauchsfertige Lösungen mit hohen Farbstoffkonzentrationen erhalten werden.

Die Konzentrationen liegen vorzugsweise zwischen 10 und 40 Gew.-%.

Zur Herstellung der neuen Farbstoffe werden die Farbstoffe IV (mit $R^1$ = Wasserstoff) enthaltenden Gemische in einer aliphatischen Carbonsäure, gegebenenfalls unter Zusatz einer anorganischen Säure, gelöst oder suspendiert und dann mit den Epoxiden III umgesetzt. Die Herstellung der Farbstoffe IV (mit $R^1$ = Wasserstoff) bzw. ihrer Lösungen kann nach bekannten Verfahren, z. B. nach Ullmanns Encyklopädie der technischen Chemie, 4. Aufl. Bd. XIII, S. 574, bzw. EP-A 0 036 553 und 0 045 840 erfolgen.

Bevorzugt wird ein Eintopfverfahren, bei dem die Diamine I, gegebenenfalls in Mischung mit den Monoaminen II, in aliphatischen Carbonsäuren mit 1 bis 4 C-Atomen, die durch Halogen, Hydroxy oder Alkoxy, beispielsweise Methoxy oder Ethoxy substituiert sein können, gegebenenfalls unter Zusatz von anorganischen Säuren mit Salzen oder Estern der salpetrigen Säure umgesetzt werden und die erhaltenen Lösungen oder Suspensionen ohne Zwischenisolierung mit den Epoxiden III behandelt werden.

Die Diazotierung erfolgt bei — 10 bis + 20 °C. In Carbonsäuren entsteht eine Lösung, bei Zusatz von Salzsäure erhält man eine Farbstoffsuspension. Man läßt nun bei einer Temperatur von 20-100 °C das Alkylenoxid einlaufen, das unmittelbar mit dem Farbstoff reagiert. Die Suspension des Chlorides geht hierbei in Lösung. Die so erhaltenen Lösungen kationischer Polyazofarbstoffe scheiden auch bei Erwärmen auf 80 °C und höher keine unlöslichen Verbindungen ab.

Durch Mischkupplung mit den aromatischen Monoaminen II läßt sich der Farbton der Färbungen in gewünschter Weise nuancieren. Mit Anilin erhält man gelbere Farbtöne, mit p-Toluidin, p-Anisidin und p-Phenetidin rötere Farbtöne.

Als aliphatische Carbonsäuren eignen sich beispielsweise : Ameisensäure, Essigsäure, Propionsäure, 2-Chlorpropionsäure, Glykolsäure, Ethoxyessigsäure, Mono-, Di- und Trichloressigsäure und Milchsäure ; bevorzugt wird Essigsäure verwendet.

Eine bevorzugte anorganische Säure ist Salzsäure.

Die Lösungen können auch Zusätze organischer Lösungsmittel enthalten, beispielsweise Ethylenglykol, Propylenglykol, Ethylenglykolmonomethylether, Ethylenglykolmonoethylether, Ethylenglykolmonobutylether, Methylglykolacetat, Ethylglykolacetat, Glykoldiacetat, Monoacetin, Triacetin, Oxypropionitril, Harnstoff, Dimethylharnstoff, Tetramethylharnstoff, Thioharnstoff, Tetramethylensulfon, Pyrrolidon, N-Methyl-pyrrolidon, Ethylencarbonat, Propylencarbonat, Caprolactam, Dimethylformamid, Butyrolacton, Methanol, Ethanol, Propanol und Isopropanol.

Die Kältestabilität der Lösungen kann hierdurch noch verbessert werden. Bevorzugt enthalten die Farbstofflösungen 5-30 Gew.-% der oben angegebenen Lösungsmittel.

Als Abkömmlinge der salpetrigen Säure eignen sich beispielsweise die Alkalisalze, insbesondere Natriumnitrit, sowie Ester, wie Propylenglykoldinitrit, Dipropylenglykoldinitrit oder Neopentylglykoldinitrit.

In Formel I steht R bevorzugt für Wasserstoff, Methyl, Methoxy, Ethoxy oder Chlor.

Geeignete Diamine der allgemeinen Formel I sind beispielsweise : 1,3-Diamino-benzol, 2,4-Diamino-toluol, 2,6-Diamino-toluol, 2,4-Diamino-anisol und Mischungen dieser Diamine in jedem Molverhältnis sowie in untergeordneten Mengen 1,2-Diamino-benzol und 1,4-Diamino-benzol.

Geeignete aromatische Monoamine der allgemeinen Formel II sind beispielsweise : Anilin, 2-Toluidin, 3-Toluidin, 4-Toluidin, 4-Amino-1,3-dimethyl-benzol, 2-Anisidin, 3-Anisidin, 4-Anisidin, 2-Phenetidin, 4-Phenetidin, 2-(4-Amino-phenoxy)-ethanol, 2-Chlor-anilin, 3-Chlor-anilin, 4-Chlor-anilin, 2,4-Dichlor-anilin und 4-Amino-acetanilid.

Geeignete Alkylenoxide der Formel III sind beispielsweise Ethylenoxid, Propylenoxid, Butylenoxid, Epichlorhydrin, Methoxypropylenoxid, Ethoxypropylenoxid, Butoxypropylenoxid.

Die neuen Farbstoffe eignen sich zur Färbung von Papier, insbesondere Altpapier, oder Leder sowie zum Färben anionisch modifizierter Fasern, z. B. Acrylnitrilpolymerisaten. Durch Mischung mit anderen Farbstoffen, insbesondere Diamino- und Triaminotriphenylmethanfarbstoffen, lassen sich stabile Lösungen herstellen, die Papier schwarz färben.

## Beispiel 1

97 g 1,3-Diamino-benzol, 110 g 2,4-Diamino-toluol und 21,4 g 3-Amino-toluol werden mit 500 ml

Eisessig, 100 ml Wasser und 100 ml konz. Salzsäure verrührt. Die Temperatur steigt hierbei bis auf 40 °C an. Man kühlt die Lösung auf 0 °C ab und tropft bei 0-5 °C eine Lösung von 88 g Natriumnitrit in 300 ml Wasser in ca. 30 min unter die Oberfläche ein. Danach läßt man das Reaktionsgemisch 1 h bei Raumtemperatur nachrühren, erwärmt es auf 60 °c und tropft nun 133 g Propylenoxid in die Suspension ein. Bereits während des Eintropfens geht der Farbstoff in Lösung. Man läßt 1 h bei 80 °C rühren, kühlt die dunkelbraune Lösung auf Raumtemperatur ab und saugt sie ab. Auf dem Filter verbleibt kein Rückstand. Holzschliffhaltiges Papier wird in einem rotstichigen Braun gefärbt.

$\lambda_{max}$ = 460 nm

Beispiel 2

97 g 1,3-Diamino-benzol, 110 g 2,4-Diamino-toluol und 21,4 g 3-Amino-toluol werden in 600 ml Eisessig gelöst, auf 0-5 °C abgekühlt, und unter die Oberfläche wird eine Lösung von 88 g Natriumnitrit in 174 ml Wasser getropft. Man läßt 1 h bei Raumtemperatur nachrühren, erwärmt dann die dunkelbraune Lösung auf 60 °C und tropft 150 g Propylenoxid innerhalb von 1 h ein. Die Temperatur steigt bis auf 70-72 °C an. Man erwärmt das Reaktionsgemisch nun auf 100 °C und läßt es 3 h auf siedendem Wasserbad rühren. Nach Abkühlen auf Raumtemperatur saugt man die Lösung ab ; auf dem Filter verbleibt kein Rückstand. Holzschliffhaltiges Papier wird in einem rotstichigen Braun gefärbt.

$\lambda_{max}$ = 455 nm

Beispiel 3

220 g 2,4-Diamino-toluol werden in 700 ml Eisessig bei 50-60 °C gelöst. Nach Abkühlen auf Raumtemperatur werden 21,4 g 3-Amino-toluol zugesetzt, und nach weiterem Abkühlen auf 0 °C tropft man eine Lösung von 88 g Natriumnitrit in 300 ml Wasser bei 0-5 °C innerhalb von 2,5 h unter die Oberfläche ein. 200 g dieser Lösung werden mit 20 g Propylenoxid versetzt und 3 h bei 100 °C gerührt. Nach Abkühlen auf Raumtemperatur saugt man die Lösung ab ; auf dem Filter verbleibt kein Rückstand. Holzschliffhaltiges Papier wird in einem gelbstichigen Braun gefärbt.

$\lambda_{max}$ = 458 nm

Beispiel 4

244 g 2,4-Diamino-toluol werden in 700 ml Eisessig bei 50-60 °C gelöst, die Lösung wird auf 0 °C abgekühlt und eine Lösung von 88 g Natriumnitrit in 300 ml Wasser bei 0-5 °C in 2,5 h unter die Oberfläche eingetropft. Man läßt mehrere Stunden bei Raumtemperatur nachrühren und setzt dann 200 g dieser Lösung mit 20 g Propylenoxid um. Die Lösung wird 3 h bei 100 °C gerührt, abgekühlt und abgesaugt.

$\lambda_{max}$ = 460 nm

Beispiel 5

22 g 2,4-Diamino-toluol und 2,14 g 3-Amino-toluol werden mit 60 ml Eisessig und 10 ml konz. Salzsäure auf 55 °C erwärmt, und die Suspension wird auf 0 °C abgekühlt. Man tropft nun eine Lösung von 8,8 g Natriumnitrit in 30 ml Wasser bei 0-5 °C innerhalb von 25 min unter die Oberfläche ein und läßt das Reaktionsgemisch 1 h bei Raumtemperatur nachrühren. Nach Erwärmen auf 60 °C tropft man 13,3 g Propylenoxid ein, erwärmt 1 h auf 80 °C und saugt die Lösung ab. Holzschliffhaltiges Papier wird in einem gelbstichigen Braun gefärbt.

$\lambda_{max}$ = 448 nm

Beispiel 6

24,4 g 2,4-Diamino-toluol werden mit 50 ml Eisessig, 10 ml Wasser und 10 ml konz. Salzsäure verrührt, wobei die Temperatur bis auf 38 °C ansteigt. Man kühlt die Lösung auf 0 °C ab und tropft 8,8 g Natriumnitrit, gelöst in 30 ml Wasser, bei 0-5 °C innerhalb von 20 min unter die Oberfläche ein. Nach einstündigem Nachrühren bei Raumtemperatur ist eine Suspension des Polyazofarbstoffes entstanden. Man erwärmt die Suspension auf 40 °C und tropft 13,3 g Propylenoxid ein. Dann läßt man 1 h bei 50 °C nachrühren, wobei sich eine Farbstofflösung bildet. Nach Abkühlen auf Raumtemperatur saugt man die Lösung ab ; auf dem Filter verbleit kein Rückstand.

$\lambda_{max}$ = 444 nm

Beispiel 7

22 g 2,4-Diamino-toluol und 1,9 g Anilin werden in 60 ml Eisessig und 10 ml konz. Salzsäure bei 40 °C gelöst und auf Raumtemperatur abgekühlt. Zu der Suspension der Amine wird eine Lösung von 8,8 g Natriumnitrit in 30 ml Wasser bei 0-5 °C unter die Oberfläche eingetropft. Man läßt 1 h bei Raumtemperatur nachrühren, erwärmt das Reaktionsgemisch auf 60 °C und tropft 13,3 g Propylenoxid ein. Nach einstündigem Nachrühren bei 80 °C ist der Farbstoff vollständig gelöst. Nach Abkühlen auf Raumtemperatur wird die Lösung abgesaugt. Sie färbt holzschliffhaltiges Papier in einem gelbstichigen Braun an.

$\lambda_{max}$ = 452 nm

Setzt man anstelle von 1,9 g Anilin 2,6 g 2-Chlor-anilin, 3-Chlor-anilin oder 4-Chlor-anilin ein und verfährt sonst in gleicher Weise, so erhält man ebenfalls Farbstofflösungen, die holzschliffhaltiges Papier in einem gelbstichigen Braun anfärben.

$\lambda_{max}$ der 3 Farbstoffe = 450, 448, 452 nm

Beispiel 8

11,0 g 2,4-Diamino-toluol, 9,7 g 1,3-Diamino-benzol und 2,2 g 2-Amino-toluol werden in 70 ml Eisessig bei 30 °C gelöst. Nach Abkühlen auf 0 °C tropft man eine Lösung von 8,8 g Natriumnitrit in 30 ml Wasser bei 0-5 °C innerhalb von 20 min unter die Oberfläche ein. Dann läßt man das Reaktionsgemisch 1 h bei Raumtemperatur nachrühren, erwärmt es auf 60 °C und tropft 13,3 g Propylenoxid ein. Dann läßt man 3 h auf siedendem Wasserbad rühren, kühlt auf Raumtemperatur ab und saugt die Farbstofflösung ab. Holzschliffhaltiges Papier wird in einem rotstichigen Braun angefärbt.

$\lambda_{max}$ = 458 nm

Verwendet man in vorstehendem Beispiel anstelle von 2,2 g o-Toluidin die gleiche Menge p-Toluidin und verfährt sonst in gleicher Weise, so erhält man ebenfalls eine Farbstofflösung, die holzschliffhaltiges Papier rotstichig braun anfärbt.

$\lambda_{max}$ = 460 nm

Beispiel 9

220 g 2,4-Diamino-toluol und 21,4 g 3-Amino-toluol werden mit 700 ml Eisessig verrührt und auf 0 °C abgekühlt. Dann werden 88 g Natriumnitrit — gelöst in 300 ml Wasser — bei 0-5 °C in ca. 2,5 h unter die Oberfläche eingetropft. Man läßt mehrere Stunden bei Raumtemperatur nachrühren, bringt dann die Farbstofflösung in einen Autoklaven und setzt sie mit 150 g Ethylenoxid um. Dann läßt man 3 h bei 100 °C rühren, kühlt die Lösung ab und saugt sie ab. Man erhält eine Farbstofflösung, die holzschliffhaltiges Papier in einem violetten Braun färbt.

$\lambda_{max}$ = 464 nm

Beispiel 10

22 g 2,4-Diamino-toluol und 2,4 g 2-Amino-1,4-dimethylbenzol werden in 60 ml Eisessig und 10 ml konz. Salzsäure bei 40 °C in Lösung gebracht und auf Raumtemperatur abgekühlt. Die Kristallsuspension wird bei 0-5 °C mit einer Lösung von 8,8 g Natriumnitrit in 30 ml Wasser versetzt. Die nunmehr gebildete Suspension des Polyazofarbstoffes wird auf 50 °C erwärmt, dann werden 13,3 g Propylenoxid eingetropft und das Reaktionsgemisch 1 h bei 80 °C gerührt, wobei der Farbstoff in Lösung geht. Nach Abkühlen auf Raumtemperatur saugt man die Lösung ab. Holzschliffhaltiges Papier wird in einem gelbstichigen Braun gefärbt.

$\lambda_{max}$ = 454 nm

Verwendet man anstelle von 2,4 g 2-Amino-1,4-dimethylbenzol die gleiche Menge 4-Amino-1,2-dimethyl-benzol und verfährt sonst in gleicher Weise, so erhält man ebenfalls eine stabile Farbstofflösung, die holzschliffhaltiges Papier in einem rotstichigen Braun anfärbt.

$\lambda_{max}$ = 460 nm

Beispiel 11

11,0 g 2,4-Diamino-toluol, 9,7 g 1,3-Diamino-benzol und 3,5 g 4-Aminoacetanilid werden mit 60 ml Eisessig und 10 ml konz. Salzsäure verrührt und auf 0 °C abgekühlt. Man tropft eine Lösung von 8,8 g Natriumnitrit in 30 ml Wasser bei 0-5 °C unter die Oberfläche ein und läßt noch 1 h bei Raumtemperatur nachrühren. Dann erwärmt man das Reaktionsgemisch auf 60 °C, tropft 13,3 g Propylenoxid ein und läßt 1 h bei 80 °C nachrühren. Nach Abkühlen auf Raumtemperatur saugt man ab und erhält eine stabile Farbstofflösung, die holzschliffhaltiges Papier in einem rotstichigen Braun anfärbt.

$\lambda_{max}$ = 458 nm

Verwendet man in vorstehendem Verfahren anstelle von 3,5 g 4-Amino-acetanilid 2,5 g o-Anisidin, m-Anisidin, p-Anisidin oder 2,8 g p-Phenetidin und verfährt sonst in gleicher Weise, so erhält man ebenfalls stabile Farbstofflösungen, die holzschliffhaltiges Papier in einem rotstichigen Braun anfärben.

$\lambda_{max}$ der 4 Farbstoffe = 460, 458, 458, 460 nm

Beispiel 12

11,0 g 2,4-Diamino-toluol, 9,7 g 1,3-Diamino-benzol und 2,14 g 3-Amino-toluol werden in 70 ml

Propionsäure gelöst, die Lösung wird auf 0 °C abgekühlt und eine Lösung von 8,8 g Natriumnitrit in 30 ml Wasser bei 0-5 °C innerhalb von 30 min unter die Oberfläche eingetropft. Man läßt 1 h bei Raumtemperatur nachrühren, erwärmt die Farbstofflösung auf 60 °C und läßt 13,3 g Propylenoxid bei dieser Temperatur eintropfen. Nach dreistündigem Rühren auf siedendem Wasserbad läßt man die Lösung auf Raumtemperatur abkühlen und filtriert sie. Holzschliffhaltiges Papier wird in einem rotstichigen Braun angefärbt.

$\lambda_{max}$ = 500 nm

Beispiel 13

24,4 g 2,4-Diamino-toluol werden bei 35 °C in 70 ml Milchsäure gelöst. Die Lösung wird auf 0 °C abgekühlt und bei 0-5 °C eine Lösung von 8,8 g Natriumnitrit in 30 ml Wasser innerhalb von 20 min unter die Oberfläche eingetropft. Man läßt 1 h bei Raumtemperatur nachrühren, erwärmt die Lösung auf 60 °C und tropft 13,3 g Propylenoxid ein. Nach dreistündigem Rühren auf siedendem Wasserbad läßt man die Lösung auf Raumtemperatur abkühlen und filtriert sie. Holzschliffhaltiges Papier wird in einem rotstichigen Braun gefärbt.

$\lambda_{max}$ = 460 nm

Beispiel 14

22 g 2,4-Diamino-toluol und 2,14 g 3-Amino-toluol werden mit 70 ml Ethoxyessigsäure auf 60 °C erwärmt, wobei Lösung eintritt. Nach Abkühlen auf 0 °C tropft man in die Kristallsuspension eine Lösung von 8,8 g Natriumnitrit in 30 ml Wasser bei 0-5 °C innerhalb von 20 min unter die Oberfläche ein. Man läßt 1 h bei Raumtemperatur nachrühren, erwärmt das Reaktionsgemisch auf 60 °C und läßt 13,3 g Propylenoxid eintropfen. Dann erwärmt man 3 h auf siedendem Wasserbad, läßt die Lösung auf Raumtemperatur abkühlen und filtriert sie. Holzschliffhaltiges Papier wird in einem gelbstichigen Braun angefärbt.

$\lambda_{max}$ = 452 nm

Beispiel 15

11 g 2,4-Diamino-toluol, 9,7 g 1,3-Diamino-benzol und 2,14 g 3-Amino-toluol werden in 70 ml Eisessig bei 30 °C gelöst. Nach Abkühlen auf 0 °C tropft man eine Lösung von 8,8 g Natriumnitrit in 30 ml Wasser bei 0-5 °C in 20 min unter die Oberfläche ein. Man läßt 1 h bei Raumtemperatur nachrühren und erwärmt das Reaktionsgemisch auf 60 °C. Dann läßt man 16 g Butylenoxid eintropfen und erwärmt das Reaktionsgemisch 3 h auf siedendem Wasserbad. Nach Abkühlen auf Raumtemperatur wird die Lösung filtriert. Holzschliffhaltiges Papier wird in einem rotstichigen Braun angefärbt.

$\lambda_{max}$ = 460 nm

Beispiel 16

108 g eines technischen Gemisches von Diaminobenzol-Isomeren, bestehend aus 88 % 1,3-Diamino-benzol, 10 % 1,2-Diamino-benzol und 2 % 1,4-Diamino-benzol, werden mit 175 ml Eisessig und 50 ml konz. Salzsäure verrührt. Die Temperatur steigt bis auf 48 °C, und es bildet sich eine Suspension der Chloride. Nach Abkühlen auf 0 °C werden 44 g Natriumnitrit, gelöst in 75 ml Wasser, bei 0-5 °C in 1,5 h unter die Oberfläche eingetropft. Die Suspension von Polyazofarbstoffen läßt man 1 h bei Raumtemperatur nachrühren, erwärmt sie auf 60 °C und läßt innerhalb 1 h 133 g Propylenoxid bei 60-74 °C eintropfen. Dann erwärmt man auf 80 °C und läßt das Reaktionsgemisch 1 h bei dieser Temperatur nachrühren. Die nunmehr gebildete Lösung wird auf Raumtemperatur abgekühlt und filtriert. Auf dem Filter verbleibt kein Rückstand. Die lösung färbt holzschliffhaltiges Papier in einem rotstichigen Braun

$\lambda_{max}$ = 460 nm

32,5 g dieser Lösung werden mit 7,3 g Methylviolett, 2,2 g Malachitgrün-Carbinolbase, 28 g Essigsäure und 30 g Wasser 1 h bei 50 °C verrührt. Man erhält eine Farbstoffmischung, die holzschliffhaltiges Papier schwarz färbt.

Ersetzt man die in obigem Beispiel verwendeten 50 ml konz. Salzsäure durch die äquivalente Menge Schwefelsäure, Phosphorsäure oder Salpetersäure und verfährt sonst in gleicher Weise, so erhält man gleichfalls eine stabile Farbstofflösung.

$\lambda_{max}$ = 460 nm

Beispiel 17

24,4 g 2,4-Diamino-toluol werden in 70 ml Eisessig bei 30 °C gelöst und auf 0 °C abgekühlt. Eine Lösung von 8,8 g Natriumnitrit in 30 ml Wasser wird bei 0-5 °C innerhalb von 20 min unter die Oberfläche eingetropft. Man läßt 1 h bei Raumtemperatur nachrühren, erwärmt die Lösung auf 60 °C und läßt dann 14 g Epichlorhydrin eintropfen. Nach dreistündigem Nachrühren auf siedendem Wasserbad wird die

Lösung abgekühlt und abgesaugt. Holzschliffhaltiges Papier wird in einem rotstichigen Braun angefärbt.
$\lambda_{max}$ = 466 nm

Beispiel 18

21,6 g 1,3-Diamino-benzol werden in 50 ml Eisessig, 10 ml konz. Salzsäure und 10 ml Wasser bei ca. 40 °C gelöst. Dann wird die Lösung auf 0 °C abgekühlt und bei dieser Temperatur eine Lösung von 8,8 g Natriumnitrit in 30 ml Wasser unter die Oberfläche eingetropft. Man läßt die Farbstoffsuspension 1 h bei Raumtemperatur nachrühren und tropft dann 13,0 g Propylenoxid ein. Der auskristallisierte Farbstoff geht hierbei in Lösung. Man läßt das Reaktionsgemisch 1 h bei 80 °C nachrühren und saugt es nach Abkühlen auf Raumtemperatur ab. Holzschliffhaltiges Papier wird in einem etwas rotstichigen Braun angefärbt.
$\lambda_{max}$ = 460 nm

Beispiel 19

30 g Caprolactam und 122 g eines Amingemisches aus 65 % 2,4-Diamino-toluol und 35 % 2,6-Diamino-toluol werden in 255 g Eisessig und 40 g konz. Salzsäure bei 68 °C in Lösung gebracht. Beim Abkühlen auf 0 °C fallen die Chloride der Diamine aus. Man setzt nun 46 g Natriumnitrit zu und läßt innerhalb von 3 h 45 ml Wasser bei 0-10 °C eintropfen. Anschließend läßt man 1 h unter Kühlung nachrühren und mehrere Stunden bei Raumtemperatur. Hierbei bildet sich eine Kristallsuspension kationischer Polyazofarbstoffe. Man erwärmt die Suspension auf 60 °C und läßt 54 g Propylenoxid eintropfen. Nach dreistündigem Erwärmen auf 100 °C hat sich eine Lösung gebildet, die auch beim Abkühlen auf Raumtemperatur stabil bleibt. Holzschliffhaltiges Papier wird in einem rotstichigen Braun gefärbt.
$\lambda_{max}$ = 464 nm

Beispiel 20

28,5 g eines Gemisches aus 2,4- und 2,6-Diamino-toluol (Mischungsverhältnis 2/3) und 25 g m-Phenylendiamin werden in 1 200 ml Wasser bei Raumtemperatur gelöst und mit 67 ml Natriumnitritlösung (30 g/100 ml) versetzt. Nach Zugabe von 450 g Kochsalz und 800 g Eis, wobei sich eine Temperatur von — 10 °C bis — 12 °C einstellt, läßt man 86 ml konz. Salzsäure schnell zulaufen. Anschließend erhöht man durch Zugabe von verdünnter Natriumacetatlösung den pH-Wert von 3,5. Nach einigen Stunden wird die Kupplungslösung auf pH 1 gestellt und der ausgefallene Farbstoff abgesaugt. Die feuchte Paste wird in 300 g Eisessig suspendiert, die Suspension auf 60 °C erwärmt und anschließend werden 130 g Propylenoxid eingetropft. Nach dreistündigem Erwärmen auf 80 °C hat sich eine Lösung gebildet, die holzschliffhaltiges Papier in einem rotstichigen Braun anfärbt.
$\lambda_{max}$ = 460 nm

**Patentansprüche**

1. Kationische Polyazofarbstoffe, dadurch gekennzeichnet, daß sie durch Umsetzung von Diaminobenzolen der allgemeinen Formel

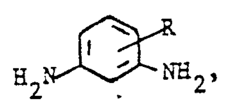

worin R für Wasserstoff, $C_1$- bis $C_4$-Alkyl, $C_1$- bis $C_4$-Alkoxy der Halogen steht, gegebenenfalls in Mischung mit bis zu 30 % aromatischen Monoaminen der Formel

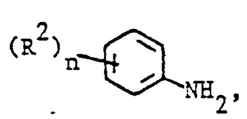

worin
$R^2$ für Wasserstoff, $C_1$- bis $C_4$-Alkyl, $C_1$- bis $C_4$-Alkoxy, Halogen oder $C_1$- bis $C_4$-Acylamino und
n für 1 bis 3 stehen,
mit 0,5 bis 0,75 mol eines Salzes oder Esters der salpetrigen Säure pro mol Diamin und anschließend mit 1 bis 4 mol eines Alkylenoxides der Formel

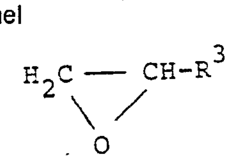

worin $R^3$ für Wasserstoff oder einen gegebenenfalls durch Hydroxy, Alkoxy oder Halogen substituierten $C_1$- bis $C_4$-Alkylrest steht,
erhältlich sind.

2. Kationische Polyazofarbstoffe nach Anspruch 1, dadurch gekennzeichnet, daß die Umsetzung mit den Alkylenoxiden und gegebenenfalls die Umsetzung mit den Salzen oder Estern der salpetrigen Säure in aliphatischen Carbonsäuren, gegebenenfalls unter Zusatz von anorganischen Säuren durchgeführt wird.

3. Kationische Polyazofarbstoffe nach Anspruch 1, dadurch gekennzeichnet, daß die beiden Umsetzungen im Eintopfverfahren ohne Zwischenisolierung in aliphatischen Carbonsäuren mit 1 bis 4 C-Atomen, die durch Halogen, Hydroxy oder Alkoxy substituiert sein können, gegebenenfalls unter Zusatz von anorganischen Säuren durchgeführt werden.

4. Kationische Polyazofarbstoffe nach Anspruch 2, dadurch gekennzeichnet, daß die Umsetzungen unter Zusatz eines organischen Lösungsmittels durchgeführt werden.

5. Kationische Polyazofarbstoffe nach Anspruch 2, dadurch gekennzeichnet, daß die Umsetzung mit den Salzen oder Estern der salpetrigen Säure bis —10 bis +30 °C und die Umsetzung mit den Alkylenoxiden bei 20-100 °C durchgeführt werden.

6. Kationische Polyazofarbstoffe der allgemeinen Formel

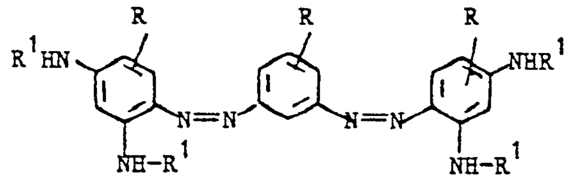 m · HX,

in welcher

R die in Anspruch 1 angegebene Bedeutung hat,

$R^1$ für Wasserstoff oder den Rest

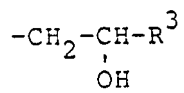

steht, worin

$R^3$ die in Anspruch 1 angegebene Bedeutung besitzt, wobei

$R^1$ mindestens einmal verschieden von Wasserstoff ist,

und worin

HX für eine aliphatische Carbonsäure mit 1 bis 4 C-Atomen, die gegebenenfalls durch Halogen, Hydroxy oder Alkoxy substituiert sein kann, oder ein Gemisch dieser Carbonsäuren mit anorganischen Säuren steht, und

m 2 bis 10 bezeichnet.

7. Verfahren zur Herstellung von kationischen Polyazofarbstoffen, dadurch gekennzeichnet, daß man Diamino-benzole der allgemeinen Formel

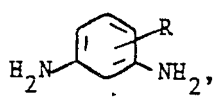

worin R für Wasserstoff, $C_1$- bis $C_4$-Alkyl, $C_1$- bis $C_4$-Alkoxy oder Halogen steht,
gegebenenfalls in Mischung mit bis zu 30 % aromatischen Monoaminen der Formel

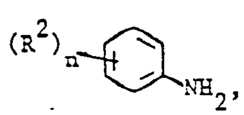

worin

$R^2$ für Wasserstoff, $C_1$-$C_4$-Alkyl, $C_1$- bis $C_4$-Alkoxy, Halogen oder $C_1$- bis $C_4$-Acylamino und

n für 1 bis 3 stehen,

mit 0,5 bis 0,75 mol eines Salzes oder Esters der salpetrigen Säure pro mol Diamin und anschließend mit 1 bis 4 mol eines Alkylenoxides der Formel

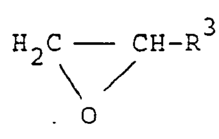

worin $R^3$ für Wasserstoff oder einen gegebenenfalls durch Hydroxy, Alkoxy oder Halogen substituierten $C_1$- bis $C_4$-Alkylrest steht,
umsetzt.

8. Lösungen, die einen Farbstoff des Anspruchs 1 enthalten.

9. Verwendung der Farbstoffe des Anspruchs 1 zum Färben von Papier, Leder und anionisch modifizierten Fasern.

10. Lösungen, die eine Mischung eines Farbstoffs des Anspruchs 1 mit einem Di- oder Tri-aminotriarylmethan-Farbstoff enthalten und Papier schwarz färben.

## Claims

1. Cationic polyazo dyestuffs, characterised in that they can be obtained by reacting diaminobenzenes of the general formula

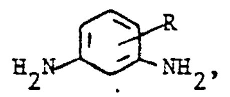

wherein R represents hydrogen, $C_1$- to $C_4$-alkyl, $C_1$- to $C_4$-alkoxy or halogen,
if appropriate in a mixture with up to 30 % of aromatic monoamines of the formula

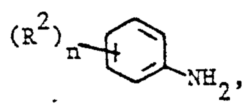

wherein
$R^2$ represents hydrogen, $C_1$- to $C_4$-alkyl, $C_1$- to $C_4$-alkoxy, halogen or $C_1$- to $C_4$-acylamino and
n represents 1 to 3,
with 0.5 to 0.75 mole of a salt or ester of nitrous acid per mole of diamine and then with 1 to 4 moles of an alkylene oxide of the formula

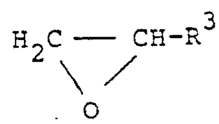

wherein $R^3$ represents hydrogen or an optionally hydroxyl-, alkoxy- or halogen-substituted $C_1$- to $C_4$-alkyl radical.

2. Cationic polyazo dyestuffs according to Claim 1, characterised in that the reaction with the alkylene oxides and, if appropriate, the reaction with the salts or esters of nitrous acid is carried out in aliphatic carboxylic acids, optionally with the addition of inorganic acids.

3. Cationic polyazo dyestuffs according to Claim 1, characterised in that the two reactions are carried out, optionally with the addition of inorganic acids, in a singlevessel process without intermediate isolation in aliphatic carboxylic acids which have 1 to 4 C atoms and which can be substituted by halogen, hydroxyl or alkoxy.

4. Cationic polyazo dyestuffs according to Claim 2, characterised in that the reactions are carried out with the addition of an organic solvent.

5. Cationic polyazo dyestuffs according to Claim 2, characterised in that the reaction with the salts or esters of nitrous acid is carried out at — 10 to + 30 °C and the reaction with the alkylene oxides at 20-100 °C.

6. Cationic polyazo dyestuffs of the general formula

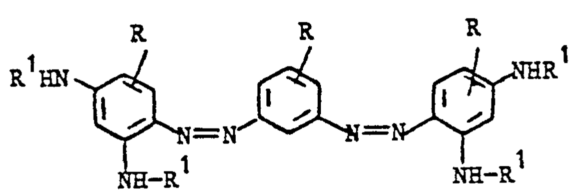

m · HX,

in which
R has the meaning given in Claim 1,
$R^1$ represents hydrogen or the radical

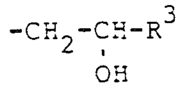

in which

$R^3$ has the meaning given in Claim 1, and

R' differs at least once from hydrogen,

and wherein

HX represents an aliphatic carboxylic acid which has 1 to 4 C atoms and which can optionally be substituted by halogen, hydroxyl or alkoxyl, or a mixture of these carboxylic acids with inorganic acids, and

m designates 2 to 10.

7. A process for preparing cationic polyazo dyestuffs, characterised in that diaminobenzenes of the general formula

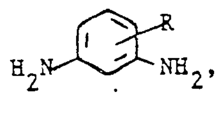

wherein R represents hydrogen, $C_1$- to $C_4$-alkyl, $C_1$- to $C_4$-alkoxy or halogen, if appropriate in a mixture with up to 30 % of aromatic monoamines of the formula

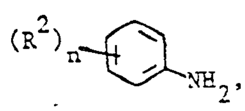

wherein

$R^2$ represents hydrogen, $C_1$-$C_4$-alkyl, $C_1$- to $C_4$-alkoxy, halogen or $C_1$- to $C_4$-acylamino and

n represents 1 to 3,

are reacted with 0.5 to 0.75 mole of a salt or ester of nitrous acid per mole of diamine and then with 1 to 4 moles of an alkylene oxide of the formula

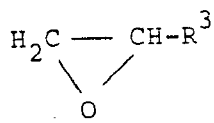

wherein $R^3$ represents hydrogen or an optionally hydroxyl-alkoxy- or halogen-substituted $C_1$- to $C_4$-alkyl radical.

8. Solutions which contain a dyestuff of Claim 1.

9. Use of the dyestuffs of Claim 1, for dyeing paper, leather and anionically modified fibres.

10. Solutions which contain a mixture of a dyestuff of Claim 1 with a diaminotriarylmethane or triaminotriarylmethane dyestuff and dye paper black.

**Revendications**

1. Colorants polyazoïques cationiques, caractérisés en ce qu'ils peuvent être obtenus par réaction de diaminobenzènes de formule générale

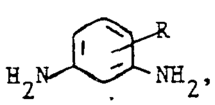

dans laquelle R représente l'hydrogène, un groupe alkyle en $C_1$ à $C_4$, un groupe alkoxy en $C_1$ à $C_4$ ou un halogène,

éventuellement en mélange jusqu'à 30 % de monoamines aromatiques de formule

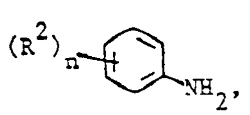

dans laquelle

$R^2$ représente l'hydrogène, un groupe alkyle en $C_1$ à $C_4$, alkoxy en $C_1$ à $C_4$, un halogène ou un groupe acylamino en $C_1$ à $C_4$ et

n a une valeur de 1 à 3,

avec 0,5 à 0,75 moles d'un sel ou ester de l'acide nitreux par mole de diamine puis avec 1 à 4 moles d'un oxyde d'alkylène de formule

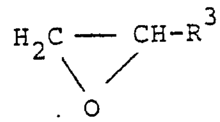

dans laquelle $R^3$ est l'hydrogène ou un reste alkyle en $C_1$ à $C_4$ portant éventuellement un substituant hydroxy, alkoxy ou halogéno.

2. Colorants polyazoïques cationiques suivant la revendication 1, caractérisés en ce que la réaction avec les oxydes d'alkylène et, le cas échéant, la réaction avec les sels ou esters de l'acide nitreux sont conduites dans des acides carboxyliques aliphatiques, éventuellement avec addition d'acides inorganiques.

3. Colorants polyazoïques cationiques suivant la revendication 1, caractérisés en ce que les deux réactions sont conduites par le procédé en réacteur unique sans isolement intermédiaire dans des acides carboxyliques aliphatiques ayant 1 à 4 atomes de carbone, qui peuvent être substitués par un halogène, un groupe hydroxy ou alkoxy, éventuellement avec addition d'acides inorganiques.

4. Colorants polyazoïques cationiques suivant la revendication 2, caractérisés en ce que les réactions sont conduites avec addition d'un solvant organique.

5. Colorants polyazoïques cationiques suivant la revendication 2, caractérisés en ce que la réaction est conduite avec les sels ou esters de l'acide nitreux jusqu'à une température de — 10 à + 30 °C et la réaction avec les oxydes d'alkylène est conduite à 20-100 °C.

6. Colorants polyazoïques cationiques de formule générale

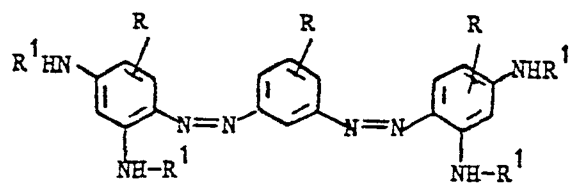 m · HX,

dans laquelle

R a la définition indiquée dans la revendication 1.

$R^1$ est l'hydrogène ou le reste

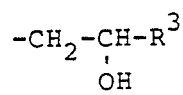

où

$R^3$ a la définition indiquée dans la revendication 1,

$R^1$ étant au moins une fois différent de l'hydrogène,

et où

HX désigne un acide carboxylique, aliphatique ayant 1 à 4 atomes de carbone qui peut éventuellement être substitué par un halogène, un groupe hydroxy ou alkoxy ou un mélange de ces acides carboxyliques avec des acides inorganiques, et

m a une valeur de 2 à 10.

7. Procédé de production de colorants polyazoïques cationiques, caractérisé en ce qu'on fait réagir des diaminobenzènes de formule générale

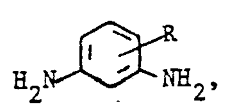

dans laquelle R désigne l'hydrogène, un groupe alkyle en $C_1$ à $C_4$, un groupe alkoxy en $C_1$ à $C_4$ ou un halogène,

éventuellement en mélange avec jusqu'à 30 % de monoamines aromatiques de formule

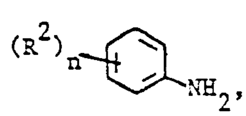

dans laquelle

$R^2$ désigne l'hydrogène, un groupe alkyle en $C_1$ à $C_4$, un groupe alkoxy en $C_1$ à $C_4$, un halogène ou

un groupe acylamino en $C_1$ à $C_4$ et

n a une valeur de 1 à 3,

avec 0,5 à 0,75 mole d'un sel ou ester de l'acide nitreux par mole de diamine puis avec 1 à 4 mole d'un oxyde d'alkylène de formule

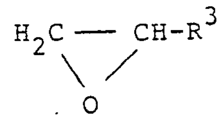

dans laquelle $R^3$ représente l'hydrogène ou un reste alkyle en $C_1$ à $C_4$ éventuellement substitué par un radical hydroxy, alkoxy ou halogéno.

8. Solutions qui contiennent un colorant suivant la revendication 1.

9. Utilisation des colorants suivant la revendication 1 pour la coloration du papier, du cuir et de fibres à modification anionique.

10. Solutions qui contiennent un mélange d'un colorant suivant la revendication 1 avec un colorant du type di- ou tri-amino-triarylméthane et qui colore le papier en noir.